# EUROPÄISCHE PATENTANMELDUNG

(11) **EP 3 502 080 A1**
(43) Veröffentlichungstag der Anmeldung: **26.06.2019**
(21) Anmeldenummer: 17209650.5
(22) Anmeldetag: 21.12.2017
(51) Int. Cl.: C05B 13/06, C05D 1/00, C05F 1/00, C05F 1/02, C05F 7/00

(54) **VERFAHREN ZUR BEHANDLUNG EINES PHOSPHORHALTIGEN MATERIALS**

(71) Anmelder: CTU Clean Technology Universe AG, 8400 Winterthur (CH)
(72) Erfinder: Stermann, Jan, 79541 Lörrach (DE); Wintgens, Thomas, 52066 Aachen (DE)
(74) Vertreter: Hepp Wenger Ryffel AG

(57) **Zusammenfassung**

Vorgeschlagen ist ein Verfahren zur Behandlung eines phosphorhaltigen Materials, insbesondere von Klärschlamm oder Tiermehl, umfassend die folgenden Schritte:
- Bereitstellen eines phosphorhaltigen Materials mit einem ersten Wassergehalt;
- Vermischen des phosphorhaltigen Materials mit zumindest einer kaliumhaltigen Substanz, um ein Gemisch zu erhalten;
- Reduzieren des Wassergehalts des Gemisches auf einen zweiten Wassergehalt;
- Thermisches Umsetzen des Gemisches, insbesondere unter reduzierenden Bedingungen, um ein Produkt zu erhalten.

Ferner ist ein Düngemittel oder Düngemittelzusatz sowie die Verwendung eines Produktes, jeweils herstellbar mit einem derartigen Verfahren, vorgeschlagen.

## Beschreibung

Die vorliegende Erfindung betrifft ein Verfahren zur Behandlung eines phosphorhaltigen Materials, ein Düngemittel oder Düngemittelzusatz herstellbar mit einem derartigen Verfahren, sowie die Verwendung eines Produktes herstellbar mit einem derartigen Verfahren, gemäss den Oberbegriffen der unabhängigen Ansprüche.

In mineralischen Stoffgemischen liegen oft kommerziell relevante Mineralanteile vor. Leider sind diese nicht immer in einer Form vorhanden, die für eine weitere Verwendung günstig ist. So enthalten Aschen vielfach Mineralien, die nicht zu Düngezwecken geeignet sind, obwohl deren Elementarzusammensetzung an sich günstig wäre. Wird zum Beispiel Klärschlamm aus Kläranlagen verbrannt, enthält die Asche zwar grosse Mengen an Phosphat, dieses ist aber für Pflanzen nicht verfügbar. Weiter enthält die Asche auch Schwermetalle, welche nur aufwendig abtrennbar sind. Neben Klärschlamm wurde darüber hinaus in der jüngeren Vergangenheit auch Tiermehl als Phosphorquelle für Düngemittel diskutiert.

In Klärschlamm liegen Phosphate als Eisen-, Aluminium- oder Calciumphosphate sowie als an Eisenoxiden, Eisenhydroxiden und Eisenoxidhydroxiden adsorbierte Phosphate vor. Diese Phosphate werden durch den Verbrennungsprozess in spezifische Calcium- oder Aluminiumphosphate überführt (z.B. Whitlockit, Stanfieldit, Nagelschmidtit, Berlinit). Diese Phosphatphasen sind anschliessend für Pflanzen nur schwer verfügbar. Um aus Aschen diese Elemente trotzdem verfügbar zu machen, sind herkömmlich aufwendige nasschemische Lösungs- und Aufreinigungsverfahren notwendig (z.B. Laugung mit anschliessender Solventextraktion, Ionentausch etc.) welche letztendlich auch sehr kostenintensiv sind, sowohl bezüglich der Investitionskosten als auch der Betriebskosten.

Die WO 2014/189433 A1 beschreibt eine thermische Umsetzung von Abfallprodukten wie Klärschlamm zu Pflanzenkohle (*engl.: "bio*char"). Dabei wird ein phosphorhaltiges Ausgangsmaterial bei einer Temperatur von 800 bis 1100 °C unter sauerstoffarmer Atmosphäre zur Reaktion gebracht. Allfällig vorhandene Schwermetalle wie Cadmium werden dadurch über die Gasphase abgeschieden. Die Vorteile des resultierenden Produktes liegen darin, dass dieses neben dem Pflanzennährstoff Phosphor auch Kalium enthält. Eine kaliumhaltige Substanz kann dem Ausgangsmaterial hinzugefügt werden, um einen besonders guten Dünger zu erhalten.

Auch die DE 10 2014 108 199 B3 beschreibt die Herstellung von Düngemitteln aus sekundären Rohmaterialien, insbesondere aus Klärschlamm. Es wird ein Prozess vorgeschlagen, bei dem ein phosphathaltiger Ausgangsstoff als Gemisch mit einem Zusatzstoff bei 850 - 1000°C kalziniert wird. Zwar handelt es sich bei diesem Zusatzstoff grundsätzlich um eine Alkali-SchwefelVerbindung, allerdings ist auch ausgeführt, dass diese durch ein Alkalimetallcarbonat oder ein Alkalimetallhydroxid, insbesondere durch Kaliumhydroxid, vollständig ersetzt werden kann.

Durch die oben beschriebenen Verfahren lassen sich zwar Phosphatdünger mit hohem Kaliumgehalt herstellen. Allerdings ist die Durchmischung des Klärschlamms mit der Kaliumquelle vor der thermischen Umsetzung oft ungenügend. Dies führt, insbesondere bei einer kontinuierlichen Prozessführung, zu langen Verweilzeiten im Reaktor, um die Ausbildung der gewünschten Phosphatphasen zu erreichen. Durch eine Sinterung der Reaktanden kann es ausserdem zu einer Entmischung derselben, und somit zu einer unvollständigen Reaktion, kommen. Eine vollständige Umsetzung in pflanzenverfügbare Phosphatphasen ist somit im Grossmassstab nicht möglich. Ausserdem verweist die DE 10 2014 108 199 B3 auf die Bildung silikatischer Verbindungen, aufgrund derer deutlich überstöchiometrische Alkalidosierungen nötig sind. Deutlich überstöchiometrische Dosierungen reduzieren jedoch die Wirtschaftlichkeit des Verfahrens. Ausserdem werden die Alkalimetalle durch Einbindung in Silikate unlöslich. Eine Reduktion der Kaliumlöslichkeit reduziert jedoch deutlich die Qualität des Düngers.

Es ist daher eine Aufgabe der vorliegenden Erfindung, die oben genannten Nachteile im Stand der Technik zu überwinden. Insbesondere ist es eine Aufgabe der vorliegenden Erfindung, ein umweltfreundliches und kostengünstiges Verfahren bereitzustellen, mit welchem im industriellen Grossmassstab phosphorhaltige Materialien wie Klärschlamm oder Tiermehl in Düngemittel mit hoher Pflanzenverfügbarkeit umgewandelt werden können.

Diese Aufgaben werden durch ein Verfahren zur Behandlung eines phosphorhaltigen Materiales, insbesondere von Klärschlamm oder Tiermehl, gelöst, welches die Merkmale in Anspruch 1 aufweist. Das Verfahren umfasst die folgenden Schritte:
- Bereitstellen eines phosphorhaltigen Materials mit einem ersten Wassergehalt;
- Vermischen des phosphorhaltigen Materials mit zumindest einer kaliumhaltigen Substanz, um ein Gemisch zu erhalten;
- Reduzieren des Wassergehalts des Gemisches auf einen zweiten Wassergehalt;
- Thermisches Umsetzen des Gemisches, insbesondere unter reduzierenden Bedingungen, um ein Produkt zu erhalten.

Durch das Vermischen des phosphorhaltigen Materials mit der zumindest einen kaliumhaltigen Substanz und anschliessender Reduktion des Wassergehaltes kann vor der eigentlichen thermischen Umsetzung eine bessere Durchmischung der Reaktanden erzielt werden. Dadurch können kürzere Reaktionszeiten, eine niedrige Reaktionstemperatur und eine bessere Pflanzenverfügbarkeit des Produktes erreicht werden.

Vorzugsweise wird beim Vermischen des phosphorhaltigen Materials mit der zumindest einer kaliumhaltigen Substanz eine weitere nicht kaliumhaltige Substanz, bevorzugt ein Erdalkalisalz, und ganz besonders bevorzugt CaO, CaCO₃, CaSO₄, CaCl₂ oder CaOH, zugegeben.

Es hat sich überraschend herausgestellt, dass die Zugabe von Erdalkalisalz, beispielsweise CaO, vermehrt zur Bildung von Calcium-Silikaten führt. Die Bildung von Calciumsilikaten ist der Bildung von unlöslichem Calciumphosphaten gegenüber begünstigt. Dadurch kann mehr Kalium und Phosphor gelöst werden und das Gleichgewicht wird zu Gunsten der Bildung von löslichem CaKPO₄ verschoben.

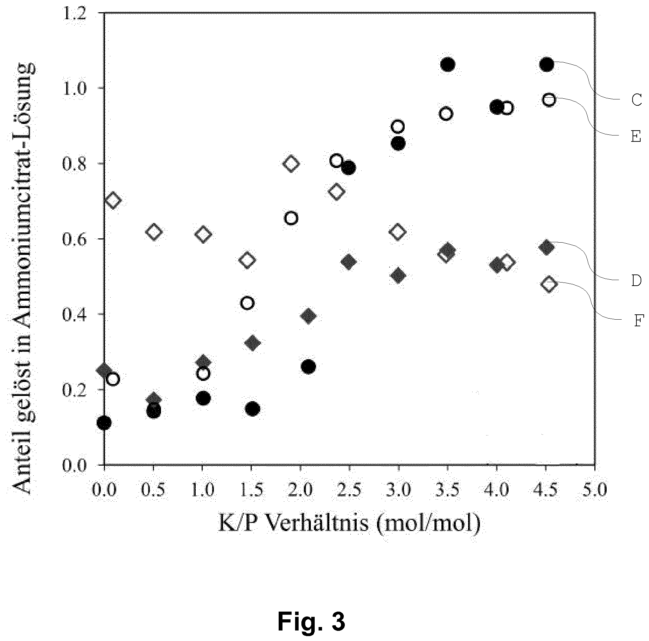

Beispielsweise konnte bei einer Zugabe von 2 Teilen (Gew. %) Calciumoxid im Verhältnis zu 100 Teilen entwässertem Klärschlamm bei einem K/P Verhältnis im Produkt von 2 (mol/mol) die Löslichkeit für P von 25 % auf 70 % und für K von 40 % auf 80 % gesteigert werden (Abbildung 3).

Da es sich bei CaO um eine äusserst preisgünstige Substanz handelt, ist eine zumindest teilweise Substitution von KOH durch CaO auch im geringen Umfang betriebswirtschaftlich attraktiv.

Der erste Wassergehalt kann 60 bis 85 Gew.-%, vorzugsweise 65 bis 80 Gew.-%, bevorzugterweise 67 bis 75 Gew.-% betragen. Der zweite Wassergehalt kann 0 bis 20 Gew.-%, vorzugsweise 5 bis 15 Gew.-%, bevorzugterweise 7 bis 12 Gew.-% betragen. Dabei handelt es sich um Werte, bei denen erste eine Durchmischung und später eine thermische Umsetzung besonders günstig ablaufen kann.

Das Vermischen des phosphorhaltigen Materials mit der zumindest einen kaliumhaltigen Substanz und das Reduzieren des Wassergehalts des Gemisches auf den zweiten Wassergehalt können in zwei separaten Schritten erfolgen. Die Vermischung des KOH und des Klärschlamms erfolgt idealerweise nach dem Verfahrensschritt der Klärschlammentwässerung beispielsweise mit Hilfe einer Dekanterzentrifuge und vor der Klärschlammtrocknung beispielsweise mit Hilfe eines Bandtrockners.

Zwei Schritte haben den Vorteil, dass zwischen dem Mischschritt und dem Trocknungsschritt idealerweise etwas Zeit vergehen kann, z.B. 1 h, so dass die optimale Verteilung über Diffusionsprozesse erreicht werden kann. Die Vermischung kann zum Beispiel mit einem Paddelmischer und die Trocknung bspw. auf einem Bandtrockner oder in einem Trommeltrockner erfolgen.

Das Vermischen des phosphorhaltigen Materials mit der zumindest einen kaliumhaltigen Substanz kann mittels eines Pflugscharmischers oder eines Paddelmischers erfolgen. Es hat sich überraschenderweise gezeigt, dass diese Mischerarten für den besagten Zweck besonders geeignet sind.

Beim Vermischen des phosphorhaltigen Materials mit der zumindest einen kaliumhaltigen Substanz kann im Gemisch ein überstöchiometrisches Verhältnis zwischen Kalium und Phosphor hergestellt werden. Damit kann sichergestellt werden, dass im Wesentlichen der gesamte vorhandene Phosphor rasch zu einem pflanzenverfügbaren Phosphat umgesetzt wird. Besonders günstig ist in diesem Zusammenhang ein überstöchiometrisches Verhältnis zwischen Kalium und Phosphor in einem Bereich von 1.1:1 bis 7:1, vorzugsweise von 1.5:1 bis 5:1, bevorzugterweise von 2:1 bis 4:1.

Die kaliumhaltige Substanz kann im Wesentlichen frei von Silizium sein. Im Stand der Technik wird die thermische Umsetzung in der Regel in Gegenwart von Silizium durchgeführt, sei es als Bestandteil der kaliumhaltigen Substanz oder als Fluidisierungshilfe in einem Wirbelschichtreaktor. Dies führt einerseits zu einer Verringerung des Nährstoffgehalts im Produkt. Andererseits bindet Silizium im angewendeten Temperaturbereich im hohen Masse Kalium durch Einbindung in silikatische Glasstrukturen. Damit liegt Phosphor als Tricalciumphosphat und Kalium in silikatischer Struktur im Produkt vor und sind in dieser Form nicht pflanzenverfügbar. Durch eine Minimierung von Silizium im Reaktionsgemisch kann dies vermieden werden.

Die kaliumhaltige Substanz kann KOH, K₂CO₃, KCl oder K₂SO₄ sein. Dabei handelt es sich um Substanzen, die sich mit dem phosphorhaltigen Material rasch zu CaKPO₄ und damit zu einem Produkt mit hoher Pflanzenverfügbarkeit umsetzen lassen. Darüber hinaus sind diese Kaliumsalze als grosstechnisch hergestellte Produkte zu sehr günstigen Preisen verfügbar.

Zusätzlich kann beim Vermischen des phosphorhaltigen Materials mit der zumindest einer kaliumhaltigen Substanz zumindest eine weitere nicht-kaliumhaltige Substanz, insbesondere ein nichtkaliumhaltiges Alkalimetallsalz, bevorzugterweise NaOH, Na₂CO₃ oder Na₂SO₄, zugegeben werden.

Ähnlich wie Kalium sättigt auch Natrium Silizium ab. Bei einer Reaktion von phosphathaltigen Abfallströmen mit Na entsteht die Verbindung CaNaPO₄. Diese Verbindung ist ebenfalls gut pflanzenverfügbar. Zudem ist Natrium billiger als Kalium. Aus pflanzenphysiologischen Gründen sollte Natrium aber nicht in hohen Mengen zugegeben werden.

Das Gemisch kann nach dem Reduzieren des Wassergehalts auf den zweiten Wassergehalt zu Pellets verarbeitet werden. Die Pellets können einen Durchmesser von 1 mm bis 10 mm, vorzugsweise von 1.5 mm bis 7 mm, bevorzugterweise von 2 mm bis 5 mm haben. Durch die Pelletierung kann eine Entmischung verhindert werden, sodass die vollständige Menge an Alkalisalzen zur Verfügung steht.

Das thermische Umsetzen des Gemisches kann bei einer Temperatur von 700 °C bis 1100 °C, vorzugsweise von 725 °C bis 1075 °C, bevorzugterweise von 750 °C bis 1050 °C erfolgen. Allerdings kann das thermische Umsetzen des Gemisches auch bei einer Temperatur 50 °C bis 150 °C unter dem Schmelzpunkt des Produktes erfolgen. Ab den unteren Temperaturen entsteht die gewünschte Mineralphase. Eine nennenswerte Schwermetallabreicherung findet jedoch erst ab 900 °C statt. Nach oben ist der Prozess durch das zunehmende Sinterverhalten, was technische Probleme (Anbackungen) verursacht, begrenzt und wird auch energetisch ungünstiger.

Das thermische Umsetzen des Gemisches kann in einer Atmosphäre mit einem CO-Partialdruck zwischen 5·10³ Pa und 10⁵ Pa, vorzugsweise zwischen 7·10³ Pa und 1.5·10⁴ Pa, erfolgen. Ferner kann die Umsetzung mit einem H₂-Partialdruck von bis zu 10⁵ Pa erfolgen, vorzugsweise zwischen 5000 und 10000 Pa. Darüber hinaus kann die Atmosphäre einem H₂O-Partialdruck von bis zu 2·10⁴ Pa haben, vorzugsweise zwischen 10000 und 18000 Pa. Ausserdem ist das thermische Umsetzen des Gemisches in einer Atmosphäre mit einem CH₄-Partialdruck von bis zu 2·10⁴ Pa möglich, vorzugsweise zwischen 1000 und 7500 Pa.

Die reduzierenden Gase CO und H₂ führen zur Reduktion der Schwermetalle, was wiederum deren Dampfdruck erhöht und somit eine Abscheidung über die Gasphase ermöglicht. Je höher die Partialdrücke dieser Gase desto effektiver die Schwermetallabtrennung.

Das thermische Umsetzen des Gemisches kann in einem Reaktor, vorzugsweise in einem Wirbelschicht- oder Drehrohrreaktor, erfolgen. Ein Wirbelschichtreaktor zeichnet sich durch eine besonders homogene Temperaturverteilung, einen guten Stoff- und Wärmetransport sowie durch einen geringen Partikelaustrag über die Gasphase aus. Allerdings ist die Aufenthaltszeit von Partikeln in einer Wirbelschicht normalverteilt. Daher sind bei einem Wirbelschichtreaktor geringfügig längere Reaktionszeiten erforderlich als bei einem Drehrohrreaktor.

Das Gemisch kann über eine Innenwand des Reaktors und/oder über ein zugeführtes Gas beheizt werden.

Die mittlere Verweilzeit im Reaktor kann weniger als 120 min, vorzugsweise weniger als 30 min, bevorzugterweise weniger als 15 min sein. Durch derart kurze Verweilzeiten kann einerseits ein Sintern des Materials verhindert werden. Dies minimiert die Abrasion im Reaktor. Darüber hinaus wird verhindert, dass es zu einem Schmelzen der Stoffe und zur Bildung von Anbackungen im Reaktor kommt. Auch kann ein Verlust des Kaliums über die Gasphase vermindert werden. Zudem kann die Wirbelschicht bei einer kürzeren Verweildauer kleiner dimensioniert sein.

Zumindest ein Teil der Abgase aus dem Reaktor kann diesem erneut zugeführt werden. Allerdings kann auch zumindest ein Teil der Abgase aus dem Reaktor in einer Nachbrennkammer mittels eines Sauerstoffträgers verbrannt werden.

Das rückgeführte Gas kann als Wärmeträgermedium dienen und zur Erhöhung der CO/H₂ Konzentration für die Schwermetallabreicherung dienen.

Das erfindungsgemässe Verfahren kann zusätzlich den folgenden Schritt umfassen:
- Abkühlen des Produktes in einer Abkühlvorrichtung.

Das Produkt kann dabei unter einer nicht-oxidativen Atmosphäre abgekühlt werden. Dies kann vorteilhafterweise mittels Wasserdampf erfolgen. Durch den Kontakt mit dem Wasserdampf wird der Restkohlenstoff vollständig mineralisiert und es findet zusätzlich noch eine Kühlung statt. Eine vollständige Mineralisierung ist notwendig, um das Vorhandensein von schwer abbaubaren Schadstoffgruppen wie polyzyklische aromatische Kohlenwasserstoffe (PAK) sowie Dioxine und Furane vollständig ausschliessen zu können und die Zugehörigkeit zur Produktgruppe *"mineralischer Recyclingdünger"* und damit eine Produktzulassung zu garantieren. Das Abgas aus der Abkühlvorrichtung kann dem Reaktor zugeführt werden. Dadurch kann ein Teil der Prozesswäre zurückgewonnen werden.

Das erfindungsgemässe Verfahren kann ausserdem zusätzlich eine zumindest teilweise Substitution von der kaliumhaltigen Substanz durch ein Erdalkalisalz, insbesondere eines Calciumsalzes wie vorhergehend beschrieben, beinhalten. Dabei können beispielsweise 100 Teilen entwässertem Klärschlamm 1-3 Teile CaO zugegeben werden. Dadurch kann die notwendige Kaliummenge zur Erreichung nahezu vollständiger Phosphorlöslichkeit in alkalischem Ammoniumcitrat um 10 bis 50 % reduziert werden.

Beim thermischen Umsetzen des Gemisches kann eine chlorhaltige Substanz, insbesondere eine chloridhaltige Substanz, vorzugsweise HCl, zugegeben werden. Dadurch kann die Entfernung der Schwermetalle verbessert werden. Die Zugabe der chlorhaltigen Substanz kann in Abhängigkeit des Schwermetallgehaltes des Klärschlamms erfolgen, derart dass beim thermischen Umsetzen des Gemisches ein Überschuss der chlorhaltigen Substanz relativ zum Schwermetallgehalt des Klärschlamms vorliegt.

Ein weiterer Aspekt der vorliegenden Erfindung bezieht sich auf ein Düngemittel oder Düngemittelzusatz herstellbar mit einem vorgängig beschriebenen Verfahren.

Darüber hinaus bezieht sich die vorliegende Erfindung auf die Verwendung eines Produktes herstellbar mit einem vorgängig beschriebenen Verfahren als Düngemittel oder Düngemittelzusatz.

Ein weiterer Aspekt betrifft ein weiteres Verfahren zur Behandlung eines phosphorhaltigen Materials, insbesondere Klärschlamm oder Tiermehl. Das Verfahren umfasst folgende Schritte:
i) Bereitstellen eines phosphorhaltigen Materials mit einem ersten Wassergehalt,
ii) Reduzieren des Wassergehalts des phosphorhaltigen Materials auf einen zweiten Wassergehalt,
iii) Thermisches Umsetzen des phosphorhaltigen Materials bei einer ersten Temperatur,
iv) Vermischen des in Schritt iii) erhaltenen thermisch umgesetzten phosphorhaltigen Materials mit mindestens einer kaliumhaltigen Substanz,
v) Behandlung des Gemisches in Schritt iv) bei einer zweiten Temperatur, wobei die zweite Temperatur niedriger als die erste Temperatur ist.

Das Verfahren hat den Vorteil, dass eine weitgehende Schwermetallabreicherung in Schritt iii) erfolgt und gleichzeitig die notwendige Kaliummenge minimiert und die Kaliumlöslichkeit maximiert wird.

Die kaliumhaltige Substanz ist vorzugsweise KOH, K₂CO₃, KCl oder K₂SO₄ ist. Diese Substanzen lassen sich mit dem phosphorhaltigen Material rasch zu CaKPO₄ und damit zu einem Produkt mit hoher Pflanzenverfügbarkeit umsetzen.

Vorzugsweise beträgt die erste Temperatur zwischen 900-1000°C. Dadurch kann es zu einer fast vollständigen Abreicherung der Schwermetalle Zn, Pb, Cd, Hg und Tl kommen und das erhaltene thermisch umgesetzte phosphorhaltige Material ist ein fast vollständig mineralisierter Klärschlamm.

Die zweite Temperatur in Schritt v) beträgt vorzugsweise 750-850 °C. Die Behandlung des thermisch umgesetzten phosphorhaltigen Materials in diesem niedrigeren Temperaturbereich fördert die vollständige Ausbildung von CaKPO₄.

Dem Verfahren kann, wie vorhergehend bereits dargelegt, bei der Behandlung des thermisch umgesetzten phosphorhaltigen Materials mit der mindestens einen kaliumhaltigen Substanz eine weitere nicht kaliumhaltige Substanz, bevorzugt ein Erdalkalisalz, und ganz besonders bevorzugt CaO, CaCO₃, CaSO₄, CaCl₂ oder CaOH, zugegeben wird. Alternativ oder zusätzlich kann auch eine natriumhaltige Substanz, wie vorhergehend bereits dargelegt, beigefügt werden. Die sich daraus ergebenen Vorteile wurden vorhergehend bereits ausführlich dargelegt.

Der erste Wassergehalt in Schritt i) kann 60 bis 85 Gew.-%, vorzugsweise 65 bis 80 Gew.-%, bevorzugterweise 67 bis 75 Gew.-% betragen.

Der zweite Wassergehalt in Schritt ii) kann 0 bis 20 Gew.-%, vorzugsweise 5 bis 15 Gew.-%, bevorzugterweise 7 bis 12 Gew.-% betragen.

Vorzugsweise wird Schritt v) über einen Zeitraum von 5 bis 120 min, vorzugsweise 10 min bis 30 min, durchgeführt. Die Behandlung über diesem Zeitraum gewährleistet zusätzlich, dass es zur vollständigen Ausbildung von CaKPO₄ kommt.

Vorzugsweise wird während Schritt v) kontinuierlich mechanisch gerührt oder verwirbelt. Dadurch wird eine optimale Vermischung erreicht.

Beim Vermischen des phosphorhaltigen Materials mit der zumindest einer kaliumhaltigen Substanz gemäss Schritt iii) kann im Gemisch ein überstöchiometrisches Verhältnis zwischen Kalium und Phosphor hergestellt werden.

Das stöchiometrische Verhältnis zwischen Kalium und Phosphor liegt vorteilhafterweise in einem Bereich von 1.1:1 bis 7:1, vorzugsweise von 1.5:1 bis 5:1, bevorzugterweise von 2:1 bis 4:1 liegt.

Das thermische Umsetzen des phosphorhaltigen Materials kann in einer Atmosphäre mit einem CO-Partialdruck zwischen 5·10³ Pa und 10⁵ Pa, vorzugsweise zwischen 7·10³ Pa und 1.5·10⁴ Pa, erfolgen.

Alternativ kann das thermische Umsetzen des phosphorhaltigen Materials in einer Atmosphäre mit einem H₂-Partialdruck von bis zu 10⁵ Pa erfolgen, vorzugsweise zwischen 5000 und 10000 Pa.

Das thermische Umsetzen des phoshphorhaltigen Materials kann in einer Atmosphäre mit einem H₂O-Partialdruck von bis zu 2·10⁴ Pa erfolgt, vorzugsweise zwischen 10000 und 18000 Pa.

Das thermische Umsetzen des phosphorhaltigen Materials kann in einer Atmosphäre mit einem CH₄-Partialdruck von bis zu 2·10⁴ Pa erfolgt, vorzugsweise zwischen 1000 und 7500 Pa.

Die reduzierenden Gase CO und H₂ führen zur Reduktion der Schwermetalle, was wiederum deren Dampfdruck erhöht und somit eine Abscheidung über die Gasphase ermöglicht. Je höher die Partialdrücke dieser Gase desto effektiver die Schwermetallabtrennung.

Weitere Ausführungen in Bezug auf den Reaktor, die Verweilzeit, Beheizen und Abkühlen können analog dem bereits vorhergehend beschriebenen Verfahren ausgestaltet sein.
Weitere Vorteile und Einzelmerkmale der Erfindung ergeben sich aus der nachfolgenden Beschreibung eines Ausführungsbeispiels und aus der Zeichnung.

Es zeigt:
- Figur 1:: Löslichkeit von Klärschlamm in Abhängigkeit der Behandlungstemperatur und der Vermischung der Ausgangsprodukte.
- Figur 2:: Röntgendiffraktogramm von bei verschiedenen Temperaturen hergestellten Proben und zugeordneten Mineralphasen.
- Figur 3:: Einfluss der Löslichkeit auf die Löslichkeit von Kalium und Phosphor.
- Figur 4:: Fliessschema einer Anlage zur Durchführung eines ersten erfindungsgemässen Verfahrens.
- Figur 5:: Fliessschema einer Anlage zur Durchführung eines zweiten erfindungsgemässen Verfahrens.

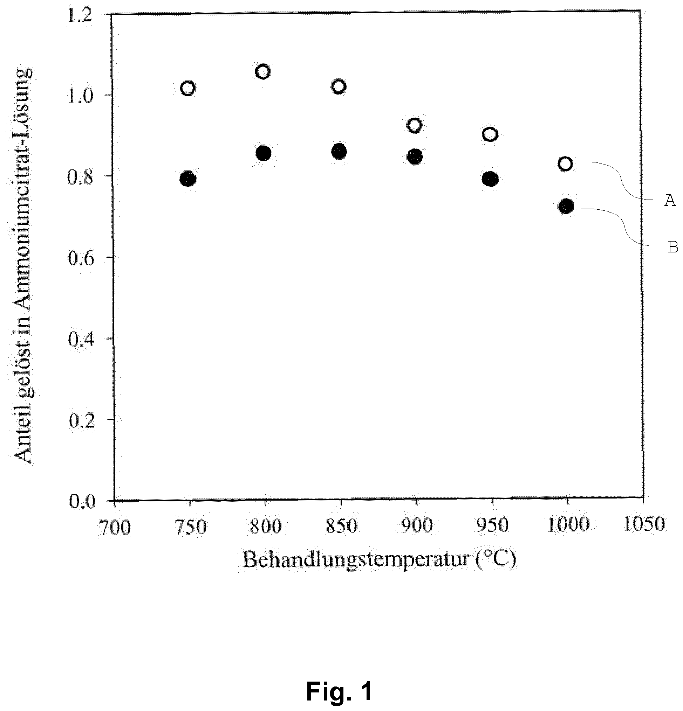

Figur 1 zeigt den Anteil an gelöstem Klärschlamm in Ammoniumcitrat-Lösung bei unterschiedlichen Behandlungstemperaturen. Dabei bezeichnet die Kurve A den Anteil an gelöstem getrocknetem Klärschlamm vermischt mit KOH. Unter getrocknet ist dabei zu verstehen, dass der Klärschlamm 90% Trockensubstanz aufweist. Die Kurve B zeigt mit KOH versetzten entwässerten Klärschlamm, d.h. der Gehalt an Trockensubstanz beträgt etwa 30 % Gewichtsprozent. Aus den Kurven ist zu entnehmen, dass mehr mit KOH versetzter Klärschlamm gelöst werden kann, wenn KOH vor der thermischen Umsetzung hinzugegeben wird. Der Test entspricht einem Standardlöslichkeitstest in einer Ammoniumkonzentrat-Lösung der Konzentration 1 mol/L.

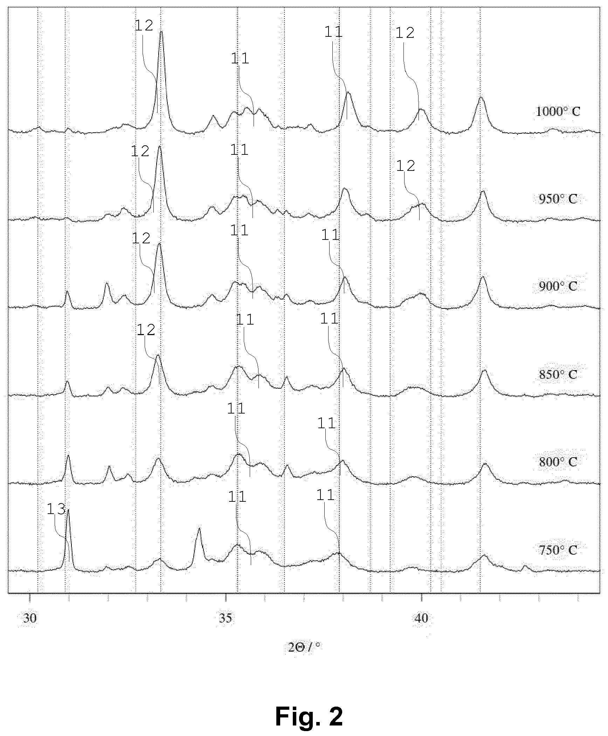

Figur 2 zeigt ein Röntgendiffraktogramm von bei verschiedenen Temperaturen hergestellten Proben und zugeordneten Mineralphasen. Dem Röntgendiffraktogramm ist die Löslichkeit in Abhängigkeit von der Kaliumdosierung und der Behandlungstemperatur zu entnehmen. Bei Temperaturen zwischen 750°C und 1000°C werden signifikante Mengen eines Gemisches 11 an gut pflanzenverfügbaren CaKPO₄ und CaNaPO₄ gebildet. Bei zunehmender Temperatur tritt zusätzlich eine Konkurrenzreaktion ein, da das Kalium zusätzlich in silikatische Strukturen 13 eingebaut wird und es kommt zur Bildung von KALSiO₄ 12. Die Kaliumlöslichkeit ist bei niedrigen Temperaturen daher am besten ausgeprägt, insbesondere im Bereich zwischen 750 bis 900°C.

Figur 3 zeigt den Einfluss der Zugabe von CaO auf die Löslichkeit von Kalium und Phosphor in Abhängigkeit vom Verhältnis Kalium zu Phosphor. Dabei bezeichnen die gefüllten Kreise C die Löslichkeit von Phosphor ohne die Zugabe von CaO. Es ist zu sehen, dass die Löslichkeit von Phosphor im Produkt bei K/P Verhältnissen kleiner 2 gering ist. Zwischen einem Verhältnis von 2-3 steigt die Löslichkeit stark an und erreicht bei ca. 3.5 vollständige Phosphorlöslichkeit. Die gefüllten Vierecke D kennzeichnen die Löslichkeit von Kalium ohne die Zugabe von CaO. Die Löslichkeit von Kalium steigt ab einem Verhältnis von ca. 1 bis 2.5 linear von etwa 20% auf etwa 60% an und verbleibt anschliessend auf diesem Niveau. Das spezifische Verhalten von Kalium kann damit erklärt werden, dass dieses zunehmend in silikatische Strukturen eingebunden wird, beispielsweise KALSiO₄. Die Kreise E kennzeichnen hingegen die Löslichkeit von Phosphor nach Zugabe von CaO. Dabei wird die Löslichkeit von Phosphor vor allem zwischen einen Verhältnis von K/P von 1 und 2.5 deutlich verbessert. Die Vierecke F kennzeichnen die Löslichkeit von Kalium in Gegenwart von CaO. Es ist zu entnehmen, dass sich die Löslichkeit bei einem Verhältnis K/P von 0 bis 3 signifikant ändert und verbessert.

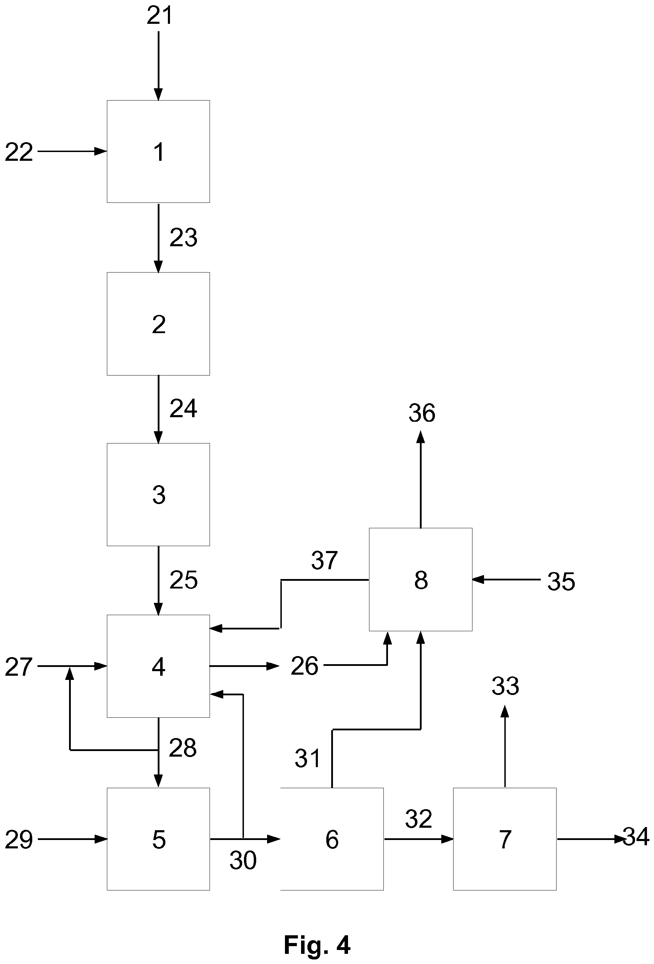

Die Figur 4 zeigt die Umsetzung von Klärschlamm 21 in die Mineralform CaKPO₄. Dies ist begünstigt, wenn Kalium, Calcium und Phosphor im richtigen stöchiometrischen Verhältnis vorliegen. Der Siliziumgehalt sollte ferner möglichst gering sein, um die Bildung thermodynamisch günstigerer Kaliumaluminiumsilikatverbindungen zu vermeiden. Zudem soll erzielt werden, dass Kalium, Calcium und Phosphor möglichst homogen verteilt vorliegen. Im Temperaturbereich, in welchem die Umsetzung stattfindet (ca. 750 - 1000 °C), befinden sich die Materialien deutlich unter dem Schmelzpunkt. Der Stofftransport ist damit vergleichsweise langsam. Aufgrund energetischer und prozesstechnischer Erwägungen wird der Prozess bevorzugt in einem Wirbelschichtreaktor 4 durchgeführt. In einer Wirbelschicht ist durch die räumliche Trennung der verschiedenen Partikel der Stofftransport zwischen den Partikeln im Vergleich zum Festbett um mehrere Grössenordnungen reduziert. Es kommt ausserdem zu einer Klassierung und Entmischung. Die reine Zudosierung einer kaliumhaltigen Substanz einerseits und des Klärschlamms andererseits würde deshalb nicht zum gewünschten Produkt führen.

Gemäss der vorliegenden Erfindung, wird das kaliumhaltige Produkt Kaliumhydroxid (KOH) 22 dem feuchten Klärschlamm 21 zugegeben. Dadurch kann wie oben erläutert eine bessere Durchmischung der Reaktanden erzielt werden. Die notwendigen Transportvorgänge für eine homogene Verteilung von Kalium, Phosphor und Calcium findet damit bereits vor Eintrag in den Wirbelschichtreaktor 4 statt. Dadurch können kurze Behandlungszeiten realisiert werden und ein Betrieb in der Wirbelschicht wird überhaupt erst möglich.

Dem Klärschlamm 21 wird direkt KOH 22 zugesetzt. Die resultierende Mischung 23 nicht verbrannt, sondern unter kontrolliert reduzierender Atmosphäre pyrolysiert und vergast. Dadurch ergibt sich eine Umwandlung der ursprünglich vorliegenden Phosphate (Eisen-, Aluminium- oder Calciumphosphate sowie an Eisenoxiden, Eisenhydroxiden und Eisenoxidhydroxiden adsorbiertes Phosphat) in ein K-Ca-Phosphat (CaKPO₄), welches zu 100 % löslich in alkalischem und neutralem Ammoniumcitrat ist und auch für die Pflanzen zu 100 % verfügbar wird. Gleichzeitig können Cd, Hg, Pb, Tl und Zn teilweise abgereichert, aus der Gasphase abgeschieden und separat deponiert werden, was dazu führt" dass von dem aus einem solchen Prozess gewonnenen Phosphatdünger pro Tonne Phosphor ein deutlich geringeres Kontaminationspotential resultiert als aus heute gebräuchlichem mit Cadmium und Uran kontaminiertem Phosphordünger, welcher aus Minen gewonnen wird.

Das beschriebene Ausführungsbeispiel ist insbesondere darum von Bedeutung, weil sich mehrere Staaten zum Ziel gesetzt haben, Phosphor aus Abwasserkläranlagen zu rezyklieren. Dies einerseits, um dem sich abzeichnenden Mangel und Kostenanstieg für Phosphor zu begegnen, andererseits um den Schwermetalleintrag (insb. Ur und Cd) in die Böden durch den heutigen Phosphordünger zu verringern. So schreibt die Schweiz mit der ab 1.1.2016 gültigen Verordnung über die Vermeidung und Entsorgung von Abfällen VVEA vor, innert 10 Jahren Phosphor aus dem Klärschlamm vollständig zu rezyklieren.

Beispielsweise werden 100 Teile (Gew.-%) mechanisch entwässerter Klärschlamm 21 mit einem ersten Wassergehalt von 75 Gew.-% in einem Pflugscharmischer 1 mit 5 Teilen (Gew.-%) KOH 22 vermischt, um ein Gemisch 23 zu erhalten. Das Gemisch 23 wird in einem Trockner 2 auf einen zweiten Wassergehalt von ca. 15 Gew.-% getrocknet. Anschliessend wird das getrocknete Gemisch 24 in einer Pelletiervorrichtung 3 zu Pellets 25 verarbeitet. Die Pellets 25 haben eine Grösse von ca. 3 mm. Durch die Beimischung des KOH 22 zum Klärschlamm 21 vor der Trocknung ist das Kaliumhydroxid in den Pellets 25 homogen verteilt.

Die Pellets 25 werden in einem Wirbelschichtreaktor 4 einer pyrolytischen Umsetzung unterworfen. Die Temperatur im Reaktor beträgt 750 - 1000 °C. Das eingesetzte Pyrolysegas 27 ist im Wesentlichen zusammengesetzt aus CO, CO₂, N₂, H₂O und H₂, damit die im Reaktor 4 ablaufenden Reaktionen (einerseits gesteuerte Pyrolyse und Vergasung der organischen Anteile, andererseits Umwandlung der Mineralien, insb. der Phosphate) optimal ablaufen können. Durch die reduktive Atmosphäre und die eingestellte Temperatur werden auch die Schwermetalle Zn, Pb, Cd, Hg, Tl quantitativ in flüchtige Bestandteile überführt, die mit dem Abgas 28 abgeführt werden.

Während ein Teil des Abgases 28 im Kreislauf geführt wird, wird der Rest abgezogen und in einer Nachbrennkammer 5 mittels des Sauerstoffträgers 29 (z.B. Luft oder angereicherte Luft) verbrannt. Die Rauchgase 30 werden konventionell einerseits zur Beheizung des Reaktors 4 und andererseits in einem Wärmetauscher 6 zur Gewinnung von Wärme 31 für externen Wärmegebrauch eingesetzt. Die gekühlten Rauchgase 32 werden in einer entsprechenden Vorrichtung 7 gereinigt, damit die Vorschriften für Emissionen 33 über den Kamin erfüllt werden können. Die anfallende Flugasche 34 ist schwermetallreich und muss geeignet entsorgt werden.

Das aus dem Reaktor 4 abgezogene Produkt 26 ist ein Gemisch aus verschiedenen Mineralien und enthält noch wenig Kohlenstoff. Die Abkühlung erfolgt in der Vorrichtung 8 unter nicht oxidativer Atmosphäre, welche einen grossen Anteil Wasserdampf 35 enthält, damit auch noch der restliche Kohlenstoff vollständig vergast wird und aus dem gekühlten Produkt 36 entfernt wird. Das gebildete Gas 37 wird dem Reaktor 4 zugeführt. Das gebildete Produkt 36 enthält 23 Gew.-% K₂O und 13 Gew.-% P2O5, wobei Phosphor überwiegend in der Mineralform CaKPO₄ vorliegt, und somit >99 Gew.-% löslichin alkalischem Ammoniumcitrat. Cd und Hg wird zu > 80 Gew.-% entfernt, Pb zu > 70 Gew.-% und Zn zu > 60 Gew.-%.

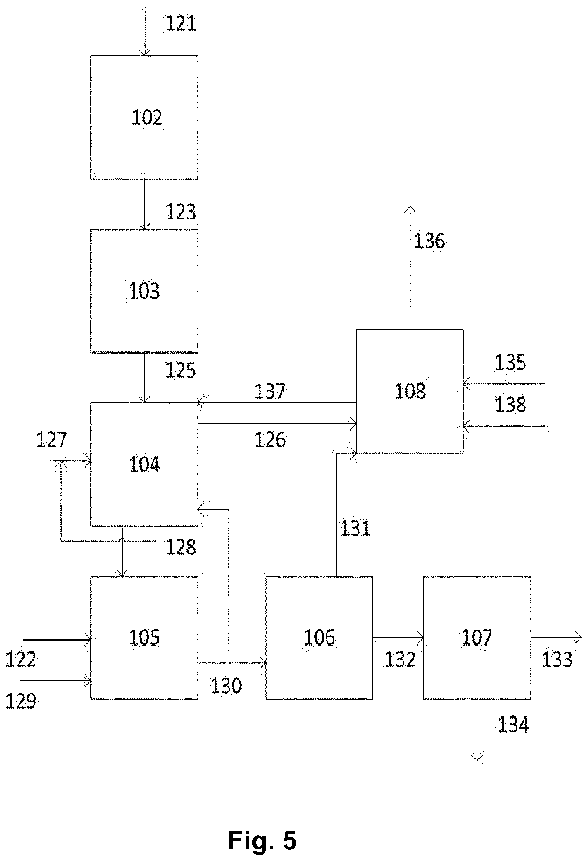

Figur 5 zeigt ein Fliessschema einer Anlage zur Durchführung eines zweiten erfindungsgemässen Verfahrens. Genauer zeigt die Figur 5 die Umwandlung in einem optimierten zweistufigen Verfahren. Hierbei werden in einem Hochtemperaturschritt unter reduzierenden Bedingungen zunächst Schwermetalle entfernt. Anschliessend wird bei niedriger Temperatur der im Klärschlamm vorhandene Phosphor in die Mineralphase CaKPO₄ umgewandelt. Das Vorgehen wird im folgenden Beispiel näher beschrieben. 100 Teile (Gew.-%) mechanisch entwässerter Klärschlamm 121 mit einem ersten Wassergehalt von 75 Gew.-% werden in einem Trockner 102 auf einen zweiten Wassergehalt von ca. 15 Gew.-% getrocknet. Anschliessend wird der getrocknete Klärschlamm 123 in einer Pelletiervorrichtung 103 zu Pellets 125 verarbeitet. Die Pellets 125 haben eine Grösse von ca. 3 mm. Die Pellets 125 werden in einem Wirbelschichtreaktor 104 einer pyrolytischen Umsetzung unterworfen. Die Temperatur im Reaktor beträgt 950 °C. Das eingesetzte Pyrolysegas 127 ist im Wesentlichen zusammengesetzt aus CO, CO₂ , N₂, H₂O und H₂, damit die im Reaktor 104 ablaufenden Reaktionen (gesteuerte Pyrolyse und Vergasung der organischen Anteile) optimal ablaufen können. Durch die reduktive Atmosphäre und die eingestellte Temperatur werden auch die Schwermetalle Zn, Pb, Cd, Hg, Tl quantitativ in flüchtige Bestandteile überführt, die mit dem Abgas 128 abgeführt werden. Während ein Teil des Abgases 128 im Kreislauf geführt wird, wird der Rest abgezogen und in einer Nachbrennkammer 105 mittels des Sauerstoffträgers 129 (z.B. Luft oder angereicherte Luft) verbrannt. Die Rauchgase werden konventionell einerseits zur Beheizung des Reaktors 104 und andererseits in einem Wärmetauscher 106 zur Gewinnung von Wärme 131 für externen Wärmegebrauch eingesetzt. Die gekühlten Rauchgase 132 werden in einer entsprechenden Vorrichtung 107 gereinigt, damit die Vorschriften für Emissionen 133 über den Kamin erfüllt werden können. Die anfallende Flugasche 134 ist schwermetallreich und muss geeignet entsorgt werden. Das aus dem Reaktor 104 abgezogene Zwischenprodukt 126 ist ein Gemisch aus verschiedenen Mineralien und enthält noch etwas Kohlenstoff. Eine teilweise Abkühlung erfolgt in der Vorrichtung 108 unter gering oxidativer Atmosphäre, welche einen grossen Anteil Wasserdampf 135 enthält, damit auch noch der restliche Kohlenstoff vollständig vergast wird und aus dem gekühlten Produkt 136 entfernt wird. Das gebildete Gas 137 wird dem Reaktor 104 zugeführt. Dem aus dem Reaktor 104 abgezogenen Produkt 131 wird in Vorrichtung 108 zudem noch das Additiv KOH 122 zugegeben. Die Zugabe kann in fester Form oder auch gelöst in hochkonzentrierter KOH Lösung erfolgen. Durch die Zugabe kommt es zu einer teilweisen Abkühlung. Vorrichtung 108 umfasst ausserdem weitere Vorrichtungen zur Temperatursteuerung, z.B. die Beheizung mittels Methan 138. Vorrichtung 108 enthält zudem noch ein mechanisches Vermischungsaggregat. Dieses garantiert eine vollständige Zerkleinerung und Vermischung des Zwischenproduktes 131 und des Additivs 122. Eine vollständige Vermischung ist notwendig, um einen hohen Stoffumsatz zu erreichen und den im Zwischenprodukt 131 enthaltenen Phosphor vollständig in die Zielverbindung CaKPO4 umzuwandeln. Vorrichtung 108 besteht beispielsweise aus einem Drehrohrofen, welcher optional weitere Vermischungsaggregate wie Schnecken etc. enthalten kann. Das gebildete Produkt 136 enthält 18 Gew.-% K₂O und 15 Gew.-% P₂O₅, davon sind > 99 Gew.-% löslich in alkalischem Ammoniumcitrat. Cd und Hg wird zu > 80 Gew.-% entfernt, Pb zu > 70 Gew.-% und Zn zu > 60 Gew.%.

## Patentansprüche

1. Verfahren zur Behandlung eines phosphorhaltigen Materials, insbesondere von Klärschlamm oder Tiermehl, umfassend die folgenden Schritte:
- Bereitstellen eines phosphorhaltigen Materials mit einem ersten Wassergehalt;
- Vermischen des phosphorhaltigen Materials mit zumindest einer kaliumhaltigen Substanz, um ein Gemisch zu erhalten;
- Reduzieren des Wassergehalts des Gemisches auf einen zweiten Wassergehalt;
- Thermisches Umsetzen des Gemisches, insbesondere unter reduzierenden Bedingungen, um ein Produkt zu erhalten.

2. Verfahren nach Anspruch 1, wobei beim Vermischen des phosphorhaltigen Materials mit der zumindest einen kaliumhaltigen Substanz eine weitere nicht kaliumhaltige Substanz, bevorzugt ein Erdalkalisalz, und ganz besonders bevorzugt CaO, CaCO₃, CaSO₄, CaCl₂ oder CaOH, zugegeben wird.

3. Verfahren nach Anspruch 1 oder 2, wobei der erste Wassergehalt 60 bis 85 Gew.-%, vorzugsweise 65 bis 80 Gew.-%, bevorzugterweise 67 bis 75 Gew.-% beträgt.

4. Verfahren nach einem der vorherigen Ansprüche, wobei der zweite Wassergehalt 0 bis 20 Gew.-%, vorzugsweise 5 bis 15 Gew.-%, bevorzugterweise 7 bis 12 Gew.-% beträgt.

5. Verfahren nach einem der Ansprüche 1 bis 4, wobei beim Vermischen des phosphorhaltigen Materials mit der zumindest einen kaliumhaltigen Substanz im Gemisch ein überstöchiometrisches Verhältnis zwischen Kalium und Phosphor hergestellt wird.

6. Verfahren nach einem der Ansprüche 1 bis 5, wobei die kaliumhaltige Substanz KOH, K₂CO₃, KCl oder K₂SO₄ ist.

7. Verfahren nach einem der Ansprüche 1 bis 6, wobei das Gemisch nach dem Reduzieren des Wassergehalts auf den zweiten Wassergehalt zu Pellets verarbeitet wird.

8. Verfahren nach einem der Ansprüche 1 bis 7, wobei das thermische Umsetzen des Gemisches bei einer Temperatur von 700 °C bis 1100 °C, vorzugsweise von 725 °C bis 1075 °C, bevorzugterweise von 750 °C bis 1050 °C erfolgt.

9. Verfahren nach einem der Ansprüche 1 bis 8, wobei das thermische Umsetzen des Gemisches bei einer Temperatur 50 °C bis 150 °C unter dem Schmelzpunkt des Produktes erfolgt.

10. Verfahren nach einem der Ansprüche 1 bis 9, wobei das thermische Umsetzen des Gemisches zweistufig bei unterschiedlichen Temperaturen erfolgt.

11. Verfahren nach einem der Ansprüche 1 bis 10, zusätzlich umfassend den Schritt:
- Abkühlen des Produktes in einer Abkühlvorrichtung.

12. Verfahren nach Anspruch 11, wobei das Produkt unter einer nicht-oxidativen Atmosphäre abgekühlt wird.

13. Verfahren nach einem der Ansprüche 1 bis 12, wobei beim thermischen Umsetzen des Gemisches eine chlorhaltige Substanz, insbesondere eine chloridhaltige Substanz, vorzugsweise HCl, zugegeben wird.

14. Düngemittel oder Düngemittelzusatz herstellbar mit einem Verfahren nach einem der Ansprüche 1 bis 13.

15. Verwendung eines Produktes herstellbar mit einem Verfahren nach einem der Ansprüche 1 bis 13 als Düngemittel oder Düngemittelzusatz.
